# EUROPÄISCHE PATENTSCHRIFT

(11) **EP 1 666 737 B1**
(45) Veröffentlichungstag und Bekanntmachung des Hinweises auf die Patenterteilung: **25.04.2012**
(21) Anmeldenummer: 05026350.8
(22) Anmeldetag: 02.12.2005
(51) Int. Cl.: F16B 2/08, F16B 2/00, B60K 15/067

(54) **Unterlage für ein Spannband**
Base for a clamping band
Base pour une bande de retenue

(30) Priorität: 06.12.2004 DE 102004058658
(43) Veröffentlichungstag der Anmeldung: 07.06.2006
(73) Patentinhaber: SaarGummi technologies S.à.r.l., 5445 Schengen (LU)
(72) Erfinder: Salina, Joachim, 66687 Wadern-Noswendel (DE); Haupenthal, Ralf, 66636 Tholey-Neipel (DE); Künzer, Andreas, 66578 Schiffweiler (DE); Schillo, Wolfgang, 66679 Losheim-Wahlen (DE)
(74) Vertreter: Bernhardt, Winfrid

(56) Entgegenhaltungen:
- EP-A- 0 901 938
- DE-U- 7 037 139

## Beschreibung

Die Erfindung betrifft eine Unterlage für ein Spannband zur Anordnung zwischen dem Spannband und einem durch das Spannband zu haltenden Kraftstofftank eines Fahrzeugs, wobei die Unterlage aus einem gegenüber dem Material des Spannbandes weicheren Material mit größerem Haftreibungskoeffizienten besteht und auf ihrer dem Spannband abgewandten Seite im Querschnitt eine Zahnung aufweist.

Solche Spannbandunterlagen werden benutzt, um einerseits die Reibungskraft zwischen dem Spannband und dem durch das Spannband zu haltenden Objekt und damit die Haltesicherheit zu erhöhen und andererseits die Oberfläche des Objekts vor Beschädigung durch das Spannband zu schützen. Die Zahnung durch Benutzung bekannter Spannbandunterlagen weist eine Wellenform auf. Die Zähne drücken sich unter der Spannkraft des Spannbandes zusammen, wobei sich ihre Auflagefläche auf dem zu haltenden Objekt vergrößert. Die Vergrößerung der Auflagefläche hat eine verringerte Flächenpressung und damit verringerte Reibungskraft zwischen der Unterlage und dem zu haltenden Objekt zur Folge. Zum Beispiel beim Anfahren und Bremsen eines Fahrzeugs am Kraftstofftank angreifende Trägheitskräfte oder die Motorvibrationen können daher eine ungewollte Verschiebung eines den Tank haltenden Spannbandes quer zu seiner Längsrichtung auf der Tankwand zur Folge haben.

Aus der DE 70 37 139 U geht eine Rohrkupplung zur Verbindung muffenloser Rohre hervor. Die Kupplung umfasst eine je zur Hälfte auf den zu verbindenden Rohrenden aufsitzende Dichtringmanschette und die Dichtringmanschette gegen die Rohrwände drückende Spannbänder. Von der Dichtringmanschette stehen gegen die Rohrwand keilförmige, zur Verbindungsstelle hin geneigte Zähne vor.

Der Erfindung liegt die Aufgabe zugrunde, eine neue Unterlage der eingangs genannten Art für ein Spannband zu schaffen, das eine stabilere Festlegung des Spannbandes auf dem zu haltenden Kraftstofftanks ermöglicht.

Die diese Aufgabe lösende Unterlage nach der Erfindung ist dadurch gekennzeichnet, dass die Zahnung durch zur Bandebene schräggestellte Zähne mit einer zur Bandebene parallelen Endfläche ausgebildet ist.

Bei Einwirkung einer zur Bandebene quer zur Längsrichtung des Spannbands parallelen Schubkraft, weiche der Schrägstellungsrichtung der Zahnung entgegengesetzt ist, kommt es zu einer Erhöhung der Flächenpressung und damit zu einer Erhöhung der Reibungskraft zwischen der Unterlage und dem zu haltenden Objekt. Verschiebungen der Unterlage quer zur Längsrichtung des Spannbandes werden so vermieden. Die parallele Endfläche liegt plan auf dem zu haltenden Objekt auf.

Während Unterlagen für in nur einer Querrichtung beanspruchte Spannbänder einen konstanten Schrägstellungswinkel über ihre gesamte Breite aufweisen können, ist in einer besonderen, für Spannbänder von Kraftfahrzeugtanks zu bevorzugenden Unterlage die Zahnung symmetrisch zu einer die Bandebene senkrecht schneidenden Ebene ausgebildet. Insbesondere sind die Zähne in den Symmetriehälften jeweils von der Symmetrieebene weg zum freien Rand der Symmetriehälfte hin geneigt. Vorteilhaft kann eine solche Spannbandunterlage sowohl beim Beschleunigen als auch Bremsen am Fahrzeugtank angreifenden Trägheitskräften entgegenwirken.

Die Endfläche kann eine den Reibungskoeffizienten erhöhende Oberflächenstruktur oder/und Beschichtung aufweisen.

In einer bevorzugten Ausführungsform der Erfindung nimmt die Breite der Zähne zum freien Ende hin ab. Zum Beispiel kann der Winkel einer Zahnflanke 55° und der Winkel der anderen Zahnflanke 50° betragen.

Vorzugsweise ist der Abstand zwischen den Zähnen geringer als die Breite der Zähne, so dass große Zahnquerschnittsflächen vorliegen, die ein starkes Zusammendrücken der Unterlage verhindern.

Auf der dem Spannband zugewandten Seite der Unterlage können Randerhöhungen gebildet sein, welche das Spannband führen und Querbewegungen des Spannbandes relativ zur Unterlage verhindern.

Die Erfindung wird nachfolgend anhand eines Ausführungsbeispiels unter Bezugnahme auf die beiliegenden, sich auf dieses Ausführungsbeispiel beziehenden Zeichnungen nöher erläutert. Es zeigen:
- Fig. 1: eine Teilquerschnittsdarstellung einer Unterlage für ein Sponnband nach der Erfindung, und
- Fig. 2: die Unterlage von Fig. 1 angeordnet zwischen einem Spannband und der Wand eines durch das Spannband zu haltenden Fahrzeugtanks.

Eine in den Figuren im Querschnitt dargestellte Unterlage 1 für ein metallisches Spannband 1 weist auf einer dem Spannband abgewandten Seite zur Bandebene schräggestellte Zähne 3 auf.

Die Zähne 3 der aus einem Elastomer hergestellten Unterlage 1 sind jeweils von einer die Bandebene senkrecht schneidenden Symmetrieebene 4 weg zum freien Rand der betreffenden Symmetriehälfte hin geneigt. Die in ihrem Querschnitt übereinstimmenden Zähne 3 jeder Symmetriehälfte weisen eine zur Plattenebene parallele Endfläche 5 und zur Plattenebene unterschiedlich geneigte Flanken 6 und 7 auf.

In dem betreffenden Ausführungsbeispiel schließt die Flanke 7 mit der Bandebene einen Winkel von α1 = 55° ein. Der Winkel zwischen der Flanke 6 und der Bandebene beträgt a2 = 50°.

. Die Periodenlänge a der Zahnung liegt in dem betrachteten Ausführungsbeispiel bei 7,7 mm, wobei die Gesamtbreite der Unterlage 62 mm beträgt. Wie die Figuren erkennen lassen, ist die Zahnbreite größer als der Abstand zwischen den Zähnen. Die Dicke der Unterlage im Bereich der Zähne liegt bei 5,6 mm, die Zahnhöhe beträgt 3,1 mm.

Auf ihrer den Zähnen 3 abgewandten Seite weist die Unterlage 1 Randerhöhungen 8 zur Führung des Spannbandes 2 auf.

An den Längsrändern der Unterlage ist jeweils ein Vorsprung 9 gebildet, welcher in dem betreffenden Ausführungsbeispiel gegenüber den Endflächen 5 der Zähne 3 zurückversetzt ist.

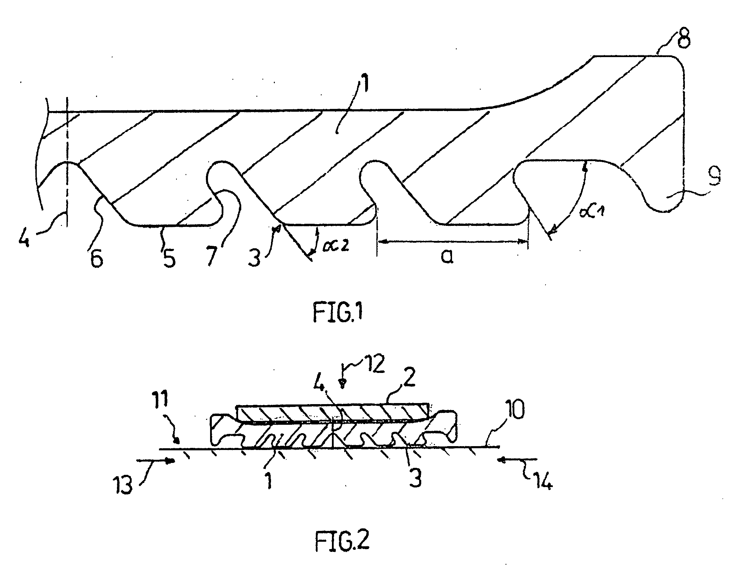

Die Unterlage 1 wird gemäß Fig. 2 zwischen einer Wand 10 eines Kraftstofftanks 11 eines Fahrzeugs und einem zur Befestigung des Fohrzeugtanks verwendeten Spannbands 2 angeordnet. Beim Festziehen des Spannbandes 2 wird gemäß Pfeil 12 eine Druckkraft auf die Unterlage 1 ausgeübt. Die Unterlage wird etwas zusammengepresst, wobei die Vorsprünge 9 ggf, gegen die Wand 10 des Tanks 11 zur Anlage kommen.

Wenn beim Beschleunigen oder Bremsen des Fahrzeugs am Tank 11 Trägheitskräfte gemäß Pfeil 13 oder 14 angreifen, kommt es durch die Schrägstellung der Zähne 3 in jeweils einer der Symmetriehälften zu einer erhöhten Flächenpressung zwischen den Zahnendflächen 5 und der Tankwand 10. Die Erhöhung der Flächenpressung hat eine entsprechende Erhöhung der Haftreibungskraft zwischen der Unterlage 1 und der Tankwand 10 zur Folge, welche verhindert, dass sich die Unterlage auf der Tankwand 10 quer zur Längsrichtung des Spannbandes verschiebt.

Relativbewegungen des Spannbandes quer zur Unterlage werden durch die Randerhöhungen 8 verhindert.

## Patentansprüche

1. Unterlage für ein Spannband (2) zur Anordnung zwischen dem Spannband (2) und einem durch das Spannband (2) zu haltenden Kraftstofftank (11) eines Fahrzeugs, wobei die Unterlage (1) aus einem gegenüber dem Material des Spannbandes (2) weicheren Material mit größerem Haftreibungskoeffizienten besteht und auf ihrer dem Spannband (2) abgewandten Seite im Querschnitt eine Zahnung aufweist,
**dadurch gekennzeichnet,**
**dass** die Zahnung durch zur Bandebene schräggestellte Zähne (3) mit einer zur Bandebene parallelen Endfläche (5) gebildet ist.

2. Unterlage nach Anspruch 1,
**dadurch gekennzeichnet,**
**dass** die Zahnung symmetrisch zu einer die Bandebene senkrecht schneidenden Ebene (4) ausgebildet ist.

3. Unterlage nach Anspruch 2,
**dadurch gekennzeichnet,**
**dass** die Zähne (3) in den Symmetriehätften jeweils von der Symmetrieebene (4) weg zum freien Rand der Symmetriehälfte hin geneigt sind.

4. Unterlage nach einem der Ansprüche 1 bis 3,
**dadurch gekennzeichnet,**
**dass** die Endfläche (5) eine den Reibungskoeffizienten erhöhende Oberflächenstruktur oder/und Beschichtung aufweist.

5. Unterlage nach einem der Ansprüche 1 bis 4,
**dadurch gekennzeichnet,**
**dass** die Breite der Zähne (3) zum freien Ende hin abnimmt.

6. Unterlage nach Anspruch 5,
**dadurch gekennzeichnet,**
**dass** eine Zahnflanke mit der Bandebene einen Winkel von 50° und die andere Zahnflanke einen Winkel von 55° einschließt.

7. Unterlage nach einem der Ansprüche 1 bis 6,
**dadurch gekennzeichnet,**
**dass** der Abstand zwischen den Zähnen (3) geringer als die Breite der Zähne (3) ist.

8. Unterlage nach einem der Ansprüche 1 bis 7,
**dadurch gekennzeichnet,**
**dass** auf der dem Spannband (2) zugewandten Seite der Unterlage Randerhöhungen (8) gebildet sind.

## Claims

1. Underlay for a clamping strap (2) for arrangement between the clamping strap (2) and a fuel tank (11), which is to be retained by the clamping strap (2), of a motor vehicle, herein the underlay (1) consists of a material, which is softer by comparison with the material of the clamping strap (2), with a higher coefficient of static friction and has in cross-section a toothing on its side remote from the clamping strap (2), **characterised in that** the toothing is formed by teeth (3), which are inclined relative to the strap plane, with an end surface (5) parallel to the strap plane.

2. Underlay according to claim 1, **characterised in that** the toothing is formed symmetrically with respect to a plane (4) perpendicularly interjecting the strap plane.

3. Underplay according to claim 2, **characterised in that** the teeth (3) in the symmetry halves are respectively inclined away from the plane (4) of symmetry towards the free edge of the symmetry half.

4. Underlay according to any one of claims 1 to 3, **characterised in that** the end surface (5) has a surface structure and/or coasting increasing the coefficient of friction.

5. Underlay according to any on of claims 1 to 4, **characterised in that** the with of the teeth (3) decreases towards the free end.

6. Underlay according to claim 5, **characterised in that** once tooth flank includes an angle of of 50° with the strap plane and the other tooth flank an angle of 55°.

7. Underlay according to any one of claims 1 to 6, **characterised in that** the spacing between the teeth (3) is smaller than the width of the teeth (3).

8. Underlay according to any one of claims 1 to 7, **characterised in that** edge elevations (8) are formed on the side of the underlay facing the clamping strap (2).

## Revendications

1. Support pour une bande de tension (2) pour l'agencement entre la bande de tension (2) et une cuve de combustible (11) à retenir par la bande de tension (2) d'un véhicule, où le support (1) est constitué d'un matériau plus ou par rapport au matériau de la bande de tension (2), avec un coefficient de frottement par adhérence plus élevé, et présente sur son côté éloigné de la bande de tension (2) en section transversale une denture, **caractérisé en ce que** la denture est formée par des dents (3) en position inclinée relativement au plan de la bande, avec une face d'extrémité (5) parallèle au plan de la bande.

2. Support selon la revendication 1, **caractérisé en ce que** la denture est réalisée d'une manière symétrique à un plan (4) coupant perpendiculairement le plan de bande.

3. Support selon la revendication 2, **caractérisé en ce que** les dents (3) dans les moitiés symétriques sont inclinées respectivement du plan de symétrie (4) vers le bord libre de la moitié symétrique.

4. Support selon l'une des revendications 1 à 3, **caractérisé en ce que** la face d'extrémité (5) présente une structure de surface et/ou un revêtement faisant augmenter le coefficient de frottement.

5. Support selon l'une des revendications 1 à 4, **caractérisé en ce que** la largeur des dents (3) diminue vers l'extrémité libre.

6. Support selon la revendication 5, **caractérisé en ce qu'**un flanc de dent forme avec le plan de bande un angle de 50° et l'autre flanc de dent un angle de 55°

7. Support selon l'une des revendications 1 à 6, **caractérisé en ce que** l'écart entre les dents (3) est plus petit que la largueur des dents (3).

8. Support selon l'une des revendications 1 à 7, **caractérisé en ce que** sont formées sur le côté du support orienté vers la bande de tension (2) des surélévations de bord (8).
